# EUROPEAN PATENT APPLICATION

(11) **EP 3 816 584 A1**
(43) Date of publication of application: **05.05.2021**
(21) Application number: 19827081.1
(22) Date of filing: 03.06.2019
(51) Int. Cl.: G01C 21/36, G01C 21/26, G06F 3/01, G06F 3/0481, G06F 3/14

(54) **ELECTRONIC DEVICE, MOBILE BODY, PROGRAM, AND CONTROL METHOD**

(30) Priority: 26.06.2018 JP 2018121297; 26.06.2018 JP 2018121298
(71) Applicant: Kyocera Corporation, Kyoto-shi, Kyoto 612-8501 (JP)
(72) Inventor: TANABE, Shigeki, Kyoto-shi, Kyoto 612-8501 (JP); UENO, Yasuhiro, Kyoto-shi, Kyoto 612-8501 (JP); MORITA, Hideki, Kyoto-shi, Kyoto 612-8501 (JP); MASUIKE, Isao, Kyoto-shi, Kyoto 612-8501 (JP); YAMAUCHI, Koutaro, Kyoto-shi, Kyoto 612-8501 (JP); SAKUMA, Manabu, Kyoto-shi, Kyoto 612-8501 (JP); SHIMADA, Kenji, Kyoto-shi, Kyoto 612-8501 (JP)
(74) Representative: Viering, Jentschura & Partner mbB Patent- und Rechtsanwälte
(86) International application number: PCT/JP2019/022027
(87) International publication number: WO 2020/003914

(57) **Abstract**

An electronic apparatus includes a sensor (a proximity sensor) and a controller. The sensor detects a gesture made without contacting the electronic apparatus. The controller, when the gesture made without contacting the electronic apparatus is detected while a first screen and a second screen are displayed in a display screen of a display, locates a position of a driver based on a direction of a first detected gesture and changes the display screen to a display screen corresponding to the position of the driver.

## Description

### CROSS REFERENCE TO RELATED APPLICATIONS

This application claims priority to Japanese Patent Applications No. 2018-121297 and No. 2018-121298 filed on June 26, 2018, the entire contents of which are incorporated herein by reference.

### TECHNICAL FIELD

The present disclosure relates to an electronic apparatus, a mobile body, a program, and a control method.

### BACKGROUND

Conventionally, apparatuses that assist users to drive a vehicle are known. For example, PTL 1 set forth below discloses a car navigation system installed in a vehicle. The car navigation system disclosed in PTL 1 assists driving of a vehicle by displaying information regarding, for example, a travel route to a destination and the like on a display.

### CITATION LIST

### Patent Literature

PTL 1: JP-2011-169860 A

### SUMMARY

An electronic apparatus according to an embodiment includes a sensor and a controller. The sensor is configured to detect a gesture made without contacting the electronic apparatus. The controller is configured to, when the gesture made without contacting the electronic apparatus is detected while a first screen and a second screen are displayed on a display screen of a display, locate a position of a driver based on a direction of a first detected gesture and change the display screen to a display screen corresponding to the position of the driver.

An electronic apparatus according to an embodiment includes a sensor and a controller. The sensor is configured to detect a gesture made without contacting the electronic apparatus. The controller is configured to, when the gesture made without contacting the electronic apparatus is detected while an icon is displayed on a display screen of a display, locate a position of a driver based on a direction of a first detected gesture and shift the icon to a position near the driver.

A mobile body according to an embodiment includes the electronic apparatus described above.

A mobile body according to an embodiment is communicatively connected to the electronic apparatus described above.

A program according to an embodiment is a program for controlling an electronic apparatus that includes a sensor configured to detect a gesture made without contacting the electronic apparatus and also includes a controller. The program causes the controller to perform a step of, when the gesture made without contacting the electronic apparatus is detected while a first screen and a second screen are displayed on a display screen of a display, locating a position of a driver based on a direction of a first detected gesture and changing the display screen to a display screen corresponding to the position of the driver.

A program according to an embodiment is a program for controlling an electronic apparatus that includes a sensor configured to detect a gesture made without contacting the electronic apparatus and also includes a controller. The program causes the controller to perform a step of, when the gesture made without contacting the electronic apparatus is detected while an icon is displayed on a display screen of a display, locating a position of a driver based on a direction of a first detected gesture and shifting the icon to a position near the driver.

A control method according to an embodiment is a control method of an electronic apparatus that includes a sensor configured to detect a gesture made without contacting the electronic apparatus and also includes a controller. The control method includes a step of, when the gesture made without contacting the electronic apparatus is detected while a first screen and a second screen are displayed on a display screen of a display, locating a position of a driver based on a direction of a first detected gesture and changing the display screen to a display screen corresponding to the position of the driver.

A control method according to an embodiment is a control method of an electronic apparatus that includes a sensor configured to detect a gesture made without contacting the electronic apparatus and also includes a controller. The control method includes a step of, when the gesture made without contacting the electronic apparatus is detected while an icon is displayed on a display screen of a display, locating a position of a driver based on a direction of a first detected gesture and shifting the icon to a position near the driver.

### BRIEF DESCRIPTION OF THE DRAWINGS

FIG. 1 is a diagram illustrating a schematic configuration of an electronic apparatus according to an embodiment;
FIG. 2 is a diagram illustrating a state in which a user operates the electronic apparatus by performing a gesture;
FIG. 3 is a diagram illustrating a schematic configuration of a proximity sensor;
FIG. 4 is a diagram illustrating a transition of a detection value detected by each infrared photodiode;
FIG. 5 is a diagram illustrating an example situation in which the electronic apparatus is operated by a gesture;
FIG. 6 is a diagram illustrating an example display screen of the electronic apparatus;
FIG. 7 is a diagram illustrating gesture directions;
FIG. 8 is a diagram illustrating an example seat arrangement of an automobile;
FIG. 9 is a diagram illustrating an example setting screen;
FIG. 10 is a diagram illustrating an example change of a display screen including two or more screens;
FIG. 11 is a diagram illustrating another example change of the display screen including two or more screens;
FIG. 12 is a diagram illustrating an example change of a display screen including icons;
FIG. 13 is a diagram illustrating an example display of an icon group including a plurality of icons;
FIG. 14 is a diagram illustrating a yet another example change of the display screen including two or more screens;
FIG. 15 is a diagram illustrating an example change of a single screen;
FIG. 16 is a flowchart illustrating an example operation to be executed by a controller of the electronic apparatus;
FIG. 17 is a diagram schematically illustrating a distance measurement sensor;
FIG. 18 is a diagram schematically illustrating an example arrangement of light receiving elements in a light receiving unit illustrated in FIG. 17;
FIG. 19 is a diagram schematically illustrating a transition of a distance to an object detected by each light receiving element;
FIG. 20 is a diagram illustrating another example arrangement of proximity sensors;
FIG. 21 is a diagram illustrating another example display of the icon group;
FIG. 22 is a diagram illustrating another example display of the icon group;
FIG. 23 is a diagram illustrating another example display of the icon group; and
FIG. 24 is a diagram illustrating another example display of the icon group.

### DETAILED DESCRIPTION

A user of a car navigation system disclosed in PTL 1 performs a touch input on a display to perform an input operation. However, it is preferable that a driver avoids performing a touch input while driving, from the viewpoint of safe driving of a vehicle. In consideration of such a circumstance, an object of the present disclosure is to provide an electronic apparatus, a mobile body, a program, and a control method that can improve driving safety of a mobile body. According to an embodiment, an electronic apparatus, a mobile body, a program, and a control method that can improve driving safety of a mobile body can be provided.

### (Configuration of Electronic Apparatus)

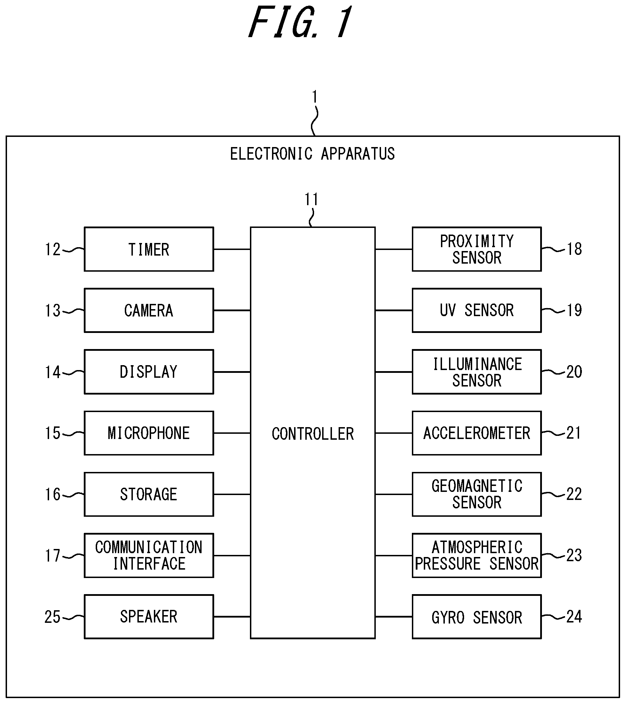

As illustrated in FIG. 1, the electronic apparatus 1 according to the embodiment includes a timer 12, a camera 13, a display 14, a microphone 15, a storage 16, a communication interface 17, a speaker 25, a proximity sensor 18 (a gesture sensor), and a controller 11. The electronic apparatus 1 further includes a UV sensor 19, an illuminance sensor 20, an acceleration sensor 21, a geomagnetic sensor 22, an atmospheric pressure sensor 23, and a gyro sensor 24. FIG. 1 illustrates an example. The electronic apparatus 1 may omit some of the elements illustrated in FIG. 1. The electronic apparatus 1 may include elements other than those illustrated in FIG. 1.

The electronic apparatus 1 may be realized by various apparatuses used for driving or steering a mobile body. The mobile body may be any movable apparatus. The mobile body may allow a user to board. The mobile body as used herein encompasses vehicles, ships, and aircrafts. Vehicles may include, for example, electric vehicles, hybrid electric vehicles, gasoline vehicles, motorcycles, bicycles, welfare vehicles, or the like. Vehicles may include, for example, railway vehicles. The mobile body may be driven or steered by a user. At least a part of a user operation associated with driving or steering the mobile body may be automated. The mobile body may be able to move autonomously without a user operation. In the following description, the mobile body will be assumed as an automobile to be driven by a user.

In a case in which the mobile body is an automobile, the electronic apparatus 1 may be realized by an in-vehicle apparatus such as a car navigation system installed in the automobile. The electronic apparatus 1 may be realized by, for example, a mobile phone terminal, a phablet, a tablet PC (Personal Computer), a smartphone, a feature phone, or the like. In this case, the electronic apparatus 1 may be communicatively connected in a wired or wireless manner with a system installed in the automobile to be driven by a user. For example, the electronic apparatus 1 may be realized by a smartphone and communicatively connected to the system installed in the vehicle via Bluetooth® (Bluetooth is a registered trademark in Japan, other countries, or both). The electronic apparatus 1 is not limited to the above examples and may be realized by any apparatus used in driving or steering a mobile body. The electronic apparatus 1 may be realized by, for example, a PDA (Personal Digital Assistant), a remote control terminal, a portable music player, a game machine, an electronic book reader, a home electric appliance, an industrial device (FA device), or the like. In the following description, the electronic apparatus 1 is assumed to be realized by a car navigation system installed in an automobile.

The timer 12 receives a timer operation instruction from the controller 11 and, when a predetermined time has elapsed, outputs a signal indicating accordingly to the controller 11. The timer 12 may be provided independently of the controller 11 as illustrated in FIG. 1 or may be built in the controller 11.

The camera 13 images a subject around the electronic apparatus 1. The camera 13 is provided on, for example, a surface of the electronic apparatus 1 on which the display 14 is provided.

The display 14 displays a screen. The screen includes at least one of, for example, a character, an image, a symbol, a figure, and the like. The display 14 may be a liquid crystal display, an organic EL (Electroluminescence) panel, an inorganic EL panel, or the like. In the present embodiment, the display 14 is a touch panel display (a touch screen display). The touch panel display detects a contact made by a finger or a stylus pen and locates a contact position. The display 14 can simultaneously detect a plurality of contact positions contacted by fingers, stylus pens, or the like.

The microphone 15 detects a sound around the electronic apparatus 1, including a person's voice.

The storage 16 serves as a memory and stores a program and data. The storage 16 temporarily stores a processing result by the controller 11. The storage 16 may include any storage device such as a semiconductor storage device or a magnetic storage device. The storage 16 may include multiple types of storage devices. The storage 16 may include a combination of a portable storage medium such as a memory card and a reading device for the storage medium.

The program stored in the storage 16 includes an application to be executed in the foreground or background and a control program that supports an operation of the application. The application causes the controller 11 to execute, for example, an operation corresponding to a gesture. The control program is, for example, an OS (Operating System). The application and the control program may be installed in the storage 16 via communication performed by the communication interface 17 or a storage medium.

The communication interface 17 is an interface for wired or wireless communication. A communication method employed by the communication interface 17 according to the embodiment is a wireless communication standard. For example, the wireless communication standard includes a cellular phone communication standard such as 2G, 3G, or 4G. For example, a communication standard of the cellular phone includes LTE (Long Term Evolution), W-CDMA (Wideband Code Division Multiple Access), CDMA2000, PDC (Personal Digital Cellular), GSM® (Global System for Mobile communications: GSM is a registered trademark in Japan, other countries, or both), PHS (Personal Handy-phone System), or the like. For example, the wireless communication standard includes WiMAX (Worldwide Interoperability for Microwave Access), IEEE 802.11, Bluetooth® (Bluetooth is a registered trademark in Japan, other countries, or both), IrDA (Infrared Data Association), NFC (Near Field Communication), or the like. The communication interface 17 can support one or more of the above communication standards.

The speaker 25 outputs a sound. The speaker 25 outputs, for example, a voice that guides a route to an input destination of the automobile. In a case in which the electronic apparatus 1 is realized by an apparatus capable of making a phone call, the speaker 25 outputs, for example, a voice of the other party during a phone call. Further, for example, when news or weather forecast are read out, the speaker 25 outputs the contents as a voice from.

The proximity sensor 18 detects a relative distance to an object around the electronic apparatus 1 and a moving direction of the object, in a non-contact manner. In the present embodiment, the proximity sensor 18 includes one light source infrared LED (Light Emitting Diode) and four infrared photodiodes. The proximity sensor 18 emits infrared light to the object from the light source infrared LED. The proximity sensor 18 receives reflected light from the object as incident light of the infrared photodiode. Then, the proximity sensor 18 can measure the relative distance to the object, based on an output current of the infrared photodiode. Further, the proximity sensor 18 detects the moving direction of the object, based on a time difference in which the reflected light from the object enters each infrared photodiode. Thus, the proximity sensor 18 can detect an operation using an air gesture (hereinafter, simply referred to as "gesture") performed by the user of the electronic apparatus 1 without contacting the electronic apparatus 1. Here, the proximity sensor 18 may include a visible light photodiode.

The controller 11 is a processor such as, for example, a CPU (Central Processing Unit). The controller 11 may be an integrated circuit such as a SoC (System-on-a-Chip) in which other elements are integrated. The controller 11 may be configured by combining a plurality of integrated circuits. The controller 11 centrally controls an operation of the electronic apparatus 1 to realize various functions.

In a case in which the electronic apparatus 1 is realized by a car navigation system installed in an automobile, the controller 11 included in the electronic apparatus 1 may be, for example, an ECU (Electric Control Unit or Engine Control Unit) provided to the automobile.

The controller 11 refers to the data stored in the storage 16, as necessary. The controller 11 realizes various functions by executing commands included in a program stored in the storage 16 and controlling other functional units such as the display 14. For example, the controller 11 acquires information regarding a user's gesture detected by the proximity sensor 18. For example, when the automobile is stationary and the electronic apparatus 1 can be operated via the touch panel, the controller 11 acquires user contact data from the touch panel. Further, for example, the controller 11 acquires information detected by a sensor other than the proximity sensor 18.

In the present embodiment, further, the controller 11 has a function as a display driver to control a display of the display 14. That is, in the present embodiment the controller 11 can directly control the display 14 to display an image. In another embodiment, a display driver may be provided independently of the controller 11. In this case, the controller 11 may cause the display 14 to display an image via the display driver.

The UV sensor 19 can measure a volume of ultraviolet rays in sunlight or the like.

The illuminance sensor 20 detects an illuminance of ambient light incident on the illuminance sensor 20.

The acceleration sensor 21 detects a direction and a magnitude of acceleration acting on the electronic apparatus 1. For example, the acceleration sensor 21 is of a three-axis (a three-dimensional) type that detects acceleration in an x-axis direction, a y-axis direction, and a z-axis direction. The acceleration sensor 21 may be of, for example, a piezoresistive type or an electrostatic capacitance type.

The geomagnetic sensor 22 detects an orientation of the geomagnetism and enables a measurement of an orientation of the electronic apparatus 1.

The atmospheric pressure sensor 23 detects an atmospheric pressure outside the electronic apparatus 1.

The gyro sensor 24 detects an angular velocity of the electronic apparatus 1. The controller 11 can measure a change in the orientation of the electronic apparatus 1 by performing time-integration of the angular velocity acquired by the gyro sensor 24.

### (Gesture Operation of Electronic Apparatus)

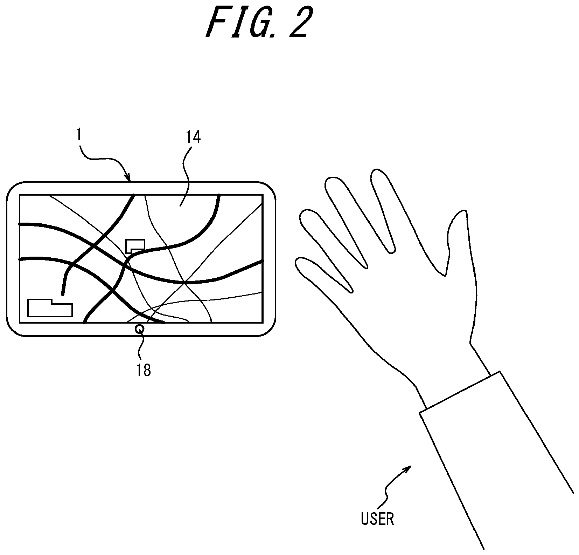

FIG. 2 illustrates a state in which the user operates the electronic apparatus 1 by performing a gesture. The electronic apparatus 1 is installed in an automobile so that the display 14 is arranged in, for example, a console panel. Alternatively, the electronic apparatus 1 may be supported by a support provided in the automobile to support the electronic apparatus 1. When the proximity sensor 18 detects a user's gesture, the controller 11 performs an operation corresponding to the detected gesture. In the example illustrated in FIG. 2, the operation corresponding to the gesture is, for example, a volume adjustment of a sound output from the speaker 25. For example, when the user gestures to move the hand upward with respect to the electronic apparatus 1, the volume increases in conjunction with the movement of the user's hand. Further, for example, when the user gestures to move the hand downward with respect to the electronic apparatus 1, the volume is reduced in conjunction with the movement of the user's hand.

The operation corresponding to the gesture is not limited to the volume adjustment. The operation corresponding to the gesture may be another operation that can be executed based on the detected gesture. For example, the operation corresponding to the gesture may include zooming in or out of information displayed on the display 14, adjusting a brightness of the display of the display 14, starting reading aloud predetermined information by a voice, stopping reading aloud by a voice, or the like.

### (Gesture Detection Method)

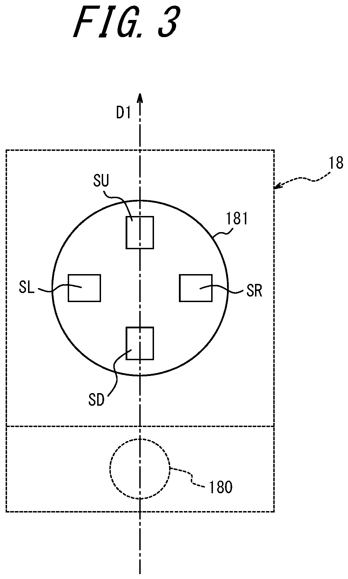

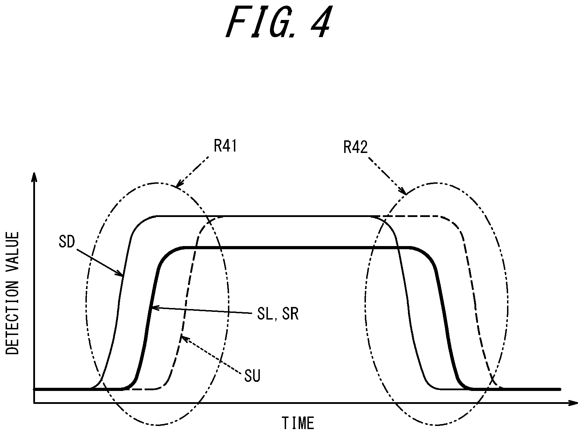

Here, a method to detect the user's gesture used by the controller 11 based on the output of the proximity sensor 18 will be described with reference to FIG. 3 and FIG. 4. FIG. 3 is a diagram illustrating an example configuration of the proximity sensor 18 when the electronic apparatus 1 is viewed from the front side thereof. The proximity sensor 18 includes a light source infrared LED 180 and four infrared photodiodes SU, SR, SD and SL. Each of the four infrared photodiodes SU, SR, SD and SL detects reflected light from the detection object via the lens 181. The four infrared photodiodes SU, SR, SD and SL are symmetrically arranged when viewed from the center of the lens 181. Here, the infrared photodiode SU and the infrared photodiode SD are arranged with a space therebetween on a virtual line D1 in FIG. 3. The infrared photodiodes SR and SL are arranged between the infrared photodiode SU and the infrared photodiode SD in a direction of the virtual line D1 in FIG. 3.

FIG. 4 illustrates a transition of a detection value of a detection object (e.g., the user's hand) by each of the four infrared photodiodes SU, SR, SD and SL that moves along the direction of the virtual line D1 in FIG. 3. Here, in the direction of the virtual line D1, a distance between the infrared photodiode SU and the infrared photodiode SD is the longest. As illustrated in FIG. 4, thus, a time difference between a change (e.g., an increase) in a detection value (represented by a broken line) by the infrared photodiode SU and the same change (e.g., an increase) in a detection value (represented by a thin solid line) by the infrared photodiode SD is the largest. The controller 11 can determine a moving direction of the detection object by grasping the time difference between the predetermined changes of the detection values by the photodiodes SU, SR, SD and SL.

The controller 11 acquires the detection values by the photodiodes SU, SR, SD and SL from the proximity sensor 18. Then, to grasp the movement of the detection object in the direction of the virtual line D1, the controller 11 may perform integration of a value obtained by subtracting the detection value by the photodiode SU from the detection value by the photodiode SD using a predetermined time. In an example illustrated in FIG. 4, the integrated values in regions R41 and R42 are not zero. From this change in the integrated value (e.g., a change of a positive value, zero, or a negative value), the controller 11 can grasp a movement of the detection object in the direction of the virtual line D1.

Further, the controller 11 may perform integration of a value obtained by subtracting the detection value by the photodiode SR from the detection value by the photodiode SL using a predetermined time. From a change in the integrated value (e.g., a change of a positive value, zero, or a negative value), the controller 11 can grasp a movement of the detection object in a direction orthogonal to the virtual line D1.

Alternatively, the controller 11 may calculate using the detection values by all of the photodiodes SU, SR, SD and SL. That is, the controller 11 may grasp the moving direction of the detection object without calculation by separating it into components in the direction of the virtual line D1 and in the direction orthogonal thereto.

A gesture to be detected includes, for example, a left-right gesture, an up-down gesture, an oblique gesture, a clockwise circular gesture, a counterclockwise circular gesture, or the like. For example, the right-left gesture is a gesture performed in a direction substantially parallel to a longitudinal direction of the electronic apparatus 1. The up-down gesture is a gesture performed in a direction substantially parallel to a transverse direction of the electronic apparatus 1. The oblique gesture is a gesture performed on a plane substantially parallel to the electronic apparatus 1 in a direction that is parallel to neither the longitudinal direction nor the transverse direction of the electronic apparatus 1.

Here, the photodiodes SU, SR, SD and SL receive reflected light of infrared light emitted from the light source infrared LED 180 on the detection object and output the respective detection values corresponding to an amount of received light. At this time, the controller 11 can also determine that the detection object is approaching or moving away from the proximity sensor 18. First, when at least one of the detection values of the photodiodes SU, SR, SD, and SL is equal to or larger than a predetermined threshold (e.g., a value that is not zero), the controller 11 can determine that the detection object is present. After the controller 11 determines that the detection object is present, when at least one of the detection values of the photodiodes SU, SR, SD, and SL relatively increases, the controller 11 can determine that the detection object is approaching the electronic apparatus 1. Further, after the controller 11 determines that the detection object is present, when at least one of the detection values of the photodiodes SU, SR, SD, and SL relatively decreases, the controller 11 can determine that the detection object is moving away from the electronic apparatus 1. At this time, the controller 11 can determine a user's gesture in which the hand approaches or moves away from the electronic apparatus 1, or a gesture in combination of one of these gestures and another gesture described above (e.g., the left-right gesture).

### (Car Mode)

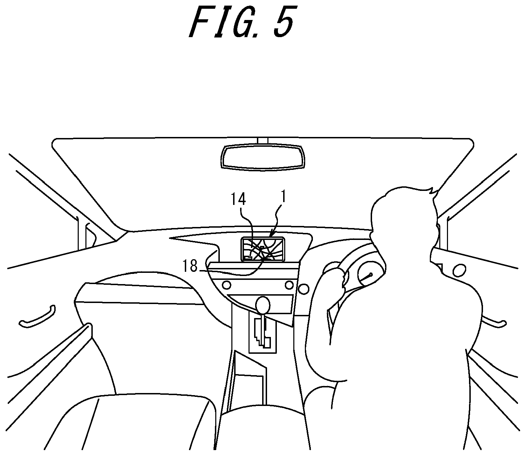

FIG. 5 illustrates an example of a situation in which the user operates the electronic apparatus 1 by performing a gesture. As illustrated in FIG. 5, the electronic apparatus 1 is arranged such that, for example, the display 14 is located at the center of the console panel of the automobile. In the example illustrated in FIG. 5, the user is driving a vehicle equipped with the electronic apparatus 1 and referring to a route to a destination displayed on the display 14 of the electronic apparatus 1. At this time, the proximity sensor 18 is in a state capable of detecting a user's gesture. The controller 11 performs an operation corresponding to a gesture detected by the proximity sensor 18.

For example, the controller 11 can perform an operation to adjust the volume of the sound output from the electronic apparatus 1, based on a specific gesture (e.g., a gesture in which the user moves the hand up and down). The electronic apparatus 1 can receive a touch input to the touch screen display from the user. However, when user performs a touch input during driving, the user may move his/her eyes to the display 14 for a while to confirm a distance to the touch screen display and a contact position. Even if at least a part of the user operation associated with driving is automated, it is desired that the user continues to pay attention on the situation around the vehicle during driving, from the viewpoint of safe driving of a vehicle. That is, it is preferred that the user does not perform a touch input. The electronic apparatus 1 capable of accepting an input operation by a gesture as described in the present embodiment enables the user to perform the input operation without contacting the electronic apparatus 1. This facilitates ensuring driving safety even when the user performs an input operation during driving.

Here, the electronic apparatus 1 may have a plurality of modes. The modes means operation modes (operation states or operation situations) that restrict overall operations of the electronic apparatus 1. Only one mode can be selected at a time. In the present embodiment, the modes of the electronic apparatus 1 include a first mode and a second mode. The first mode is a normal operation mode (a normal mode) suitable for, for example, use in situations other than driving. Such situations other than driving include, for example, any one of a situation in which the engine of the automobile is not running, a situation in which a shift lever is in a predetermined range (e.g., a parking range), a situation in which the brake is depressed, and a situation in which a route to the destination is not displayed. The second mode is an operation mode (a car mode) of the electronic apparatus 1 suitable for driving the automobile while displaying the route to the destination on the display 14 of the electronic apparatus 1. As described above, it is preferred that a gesture input is enabled in the second mode. That is, when the mode of the electronic apparatus 1 is switched to the second mode, the proximity sensor 18 is preferably operated in conjunction with the switching to be able to detect a gesture. The electronic apparatus 1 may switch the mode of the electronic apparatus 1 based on, for example, a predetermined input operation in respect to the electronic apparatus 1 or a predetermined input operation in respect to a vehicle by a user.

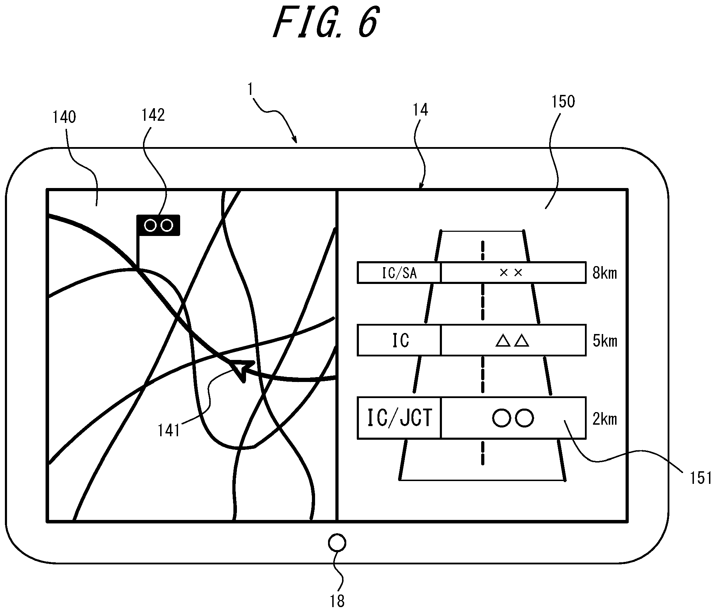

Here, FIG. 6 illustrates an example display of the display 14 of the electronic apparatus 1. A first screen 140 is, for example, a map screen and includes roads, a mark 141 indicating a current position and an orientation of the automobile, and a mark 142 indicating an interchange (IC), a building, and the like. Also, a second screen 150 is, for example, a road information screen showing information of a motorway and includes detailed information 151 regarding an interchange near the current position. The detailed information 151 includes an interchange name (e.g., XX, YY, or ZZ). The detailed information 151 also includes information whether there is a service area (SA) or a junction (JCT) near the interchange (IC). In the example illustrated in FIG. 6, a service area is indicated near an interchange XX. The detailed information 151 further includes a distance to each interchange from the current location. The example illustrated in FIG. 6 shows that a distance to an interchange YY is 5 km.

In the electronic apparatus 1 serving an in-vehicle apparatus, in particular, a configuration of the screen (hereinafter, referred to as a display screen) displayed in the entire display area of the display 14 is generally fixed. For example, regardless of a type of a vehicle, the first screen 140 (e.g., the map screen) is displayed in a left half of the display screen and the second screen 150 (e.g., the road information screen) is displayed in a right half of the display screen, as illustrated in FIG. 6. However, there are right-hand drive vehicles and left-hand drive vehicles as types of vehicles. During operating the electronic apparatus 1 having a fixed display screen, its usability greatly differs between a driver in a right-hand drive vehicle and a driver in a left-hand drive vehicle. As such, a display screen that facilitates an operation by a driver (e.g., of a right-hand drive vehicle) does not necessarily facilitate an operation by another driver (e.g., of a left-hand drive vehicle). Further, there has been a demand for an electronic apparatus 1 that has a flexible screen layout capable of reflecting a driver's preference. In the present embodiment, the controller 11 of the electronic apparatus 1 performs an operation described below and thus can provide the electronic apparatus 1 that realizes a screen layout easily operable from a driver's seat while improving the driving safety of a mobile body by enabling a gesture operation. Here, the operation described below is executed when the electronic apparatus 1 is in the car mode described above.

### (Method to Determine Position of Driver's Seat)

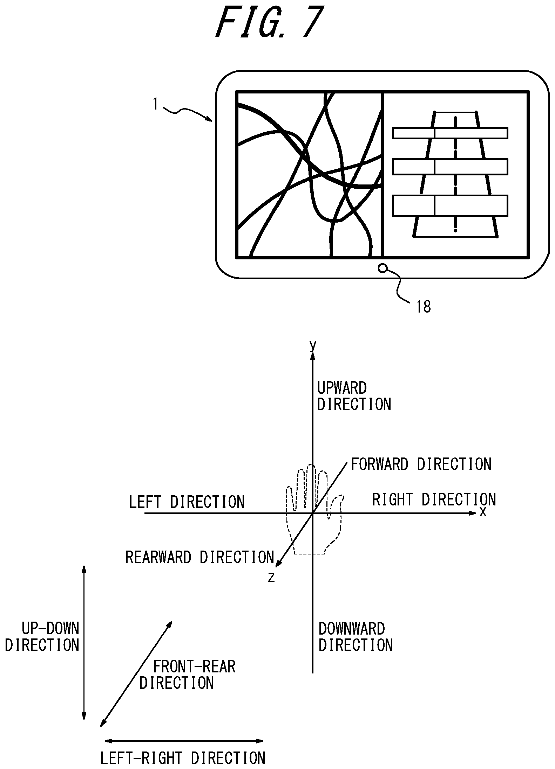

Here, in the electronic apparatus 1 gesture directions to be detected may be predetermined. For example, the gesture directions to be detected may be set to be the up-down direction, the left-right direction, and the front-rear direction, as illustrated in FIG. 7. Hereinafter, for simplification of the description it is assumed that the gesture directions to be detected are determined to be the up-down direction, the left-right direction, and the front-rear direction. That is, hereinafter, a gesture in an oblique direction and a gesture drawing a predetermined shape such as a circle will not be described as examples. However, this does not limit the gesture directions to be detected in the electronic apparatus 1 according to the present disclosure. Accordingly, the electronic apparatus 1 may detect, for example, a gesture in an oblique direction by the same method as that described below.

In FIG. 7, an orthogonal coordinate system is set, in which the x-axis is associated with the left-right direction, the y-axis is associated with the up-down direction, and the z-axis is associated with the front-rear direction. The front-rear direction is a direction approaching or moving away from the proximity sensor 18 of the electronic apparatus 1. In particular, a positive x-axis direction and a negative x-axis direction are associated with the right direction and the left direction, respectively. Further, a positive y-axis direction and a negative y-axis direction are associated with the upward direction and the downward direction, respectively. A positive z-axis direction and a negative z-axis direction are associated with the forward direction and the rearward direction, respectively.

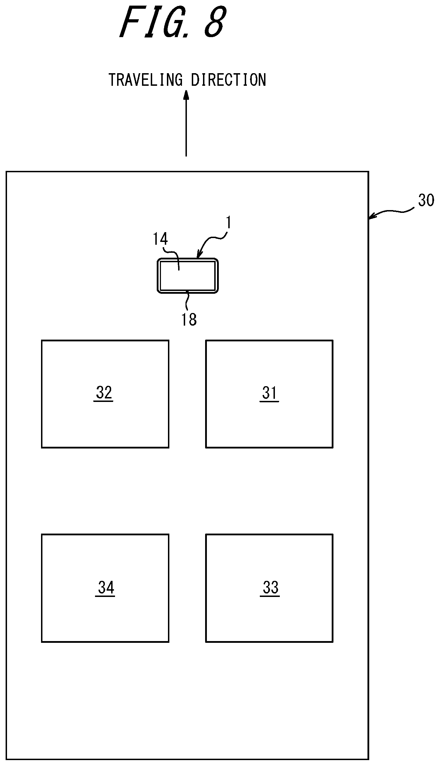

The controller 11 determines a position of the driver's seat in an automobile equipped with the electronic apparatus 1. For example, as illustrated in FIG. 8 by way of example, the automobile 30 is assumed to include two seats in the front row and two seats in the rear row with respect to a traveling direction, in which two of them are positioned on the right side and the other two seats on the left side. That is, the automobile 30 includes a seat 31 positioned on the right side of the front row, a seat 32 positioned on the left side of the front row, a seat 33 positioned on the right side of the rear row, and a seat 34 positioned on the left side of the rear row. Further, the automobile 30 includes the display 14 and the proximity sensor 18 arranged in the center in front of the front row.

Here, the driver's seat refers to a seat in which a user who drives the automobile 30 sits. In a case in which the automobile 30 includes a steering wheel (a steering device) and the user operates the steering wheel to drive, the driver's seat is the front seat at the position where the steering wheel is arranged. The steering wheel can be, for example, a handle, a lever, a bar, or the like. Generally, a steering wheel of the automobile 30 is arranged in front of one of the seats in the front row. Thus, the controller 11 determines the seat 31 positioned on the right side of the front row or the seat 32 positioned on the left side of the front row to be the position of the driver's seat.

In the present embodiment, the controller 11 determines the position of the driver's seat, based on a direction in which a first gesture is detected. The first detected gesture may be a gesture first detected after electric power is supplied to the electronic apparatus 1. In another example, the first detected gesture may be a first gesture detected after electronic apparatus 1 displays at least one of a predetermined character, image, and voice to the user. For example, the predetermined character or image may be a message such as "Please reach out to the passenger side from the driver's seat" displayed on the display 14 or an image illustrating the contents of the message. Further, the predetermined sound may be, for example, a voice output from the speaker 25, such as "Please reach out from the driver's seat to the passenger seat."

After electric power is supplied to the electronic apparatus 1, the user brings the hand closer to the electronic apparatus 1 to use it. In this case, the user's hand extends from a direction of the seat in which the user is sitting. That is, in a case in which the user is sitting on the right side with respect to the traveling direction, the user's hand extends from the right side of the proximity sensor 18 with respect to the traveling direction. On the other hand, in a case in which the user is sitting on the left side with respect to the traveling direction, the user's hand extends from the left side of the proximity sensor 18 with respect to the traveling direction. Thus, the electronic apparatus 1 can locate the position of the user, based on the direction of the first gesture detected by the proximity sensor 18. Generally, the user who intends to operate the electronic apparatus 1 while driving the automobile 30 can be assumed to be a user who drives the automobile 30. Accordingly, the controller 11 can locate the position of the driver's seat, based on the direction in which the first gesture is detected.

### (Display Setting)

After the controller 11 locates the position of the driver's seat (i.e., the position of the driver), the controller 11 changes the display screen of the display to a display screen corresponding to the position of the driver. The controller 11 changes an original display screen to a display screen corresponding to the position of the driver, in accordance with display setting of the electronic apparatus 1, which will be described later. Here, "change" of the display screen includes a case in which the original display screen is not changed in accordance with the display setting of the electronic apparatus 1, that is, a case in which there is no change in the contents of the display screen as a result.

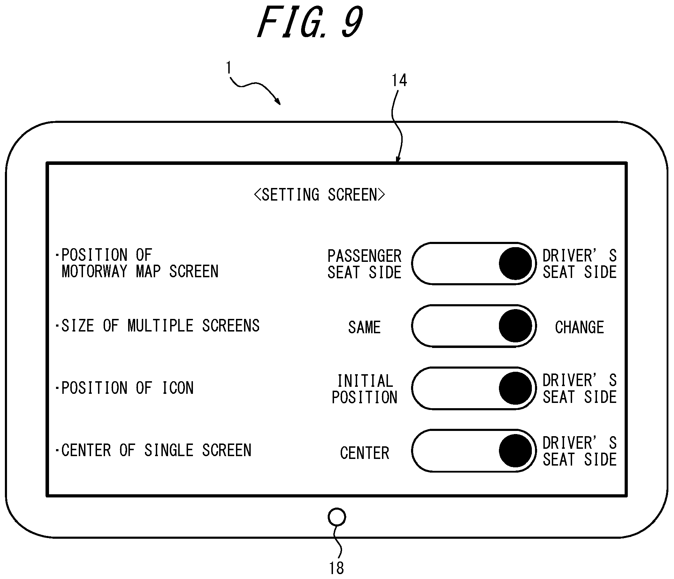

The user can specify the display settings in a setting screen of the electronic apparatus 1. FIG. 9 illustrates an example of the setting screen. In an example illustrated in FIG. 9, the user can specify "position of motorway map screen", "size of multiple images", "icon position" and "center position of single screen". Here, the setting screen may not include some of these items. Also, the setting screen may further include items other than these items.

### (Display Position According to Priority)

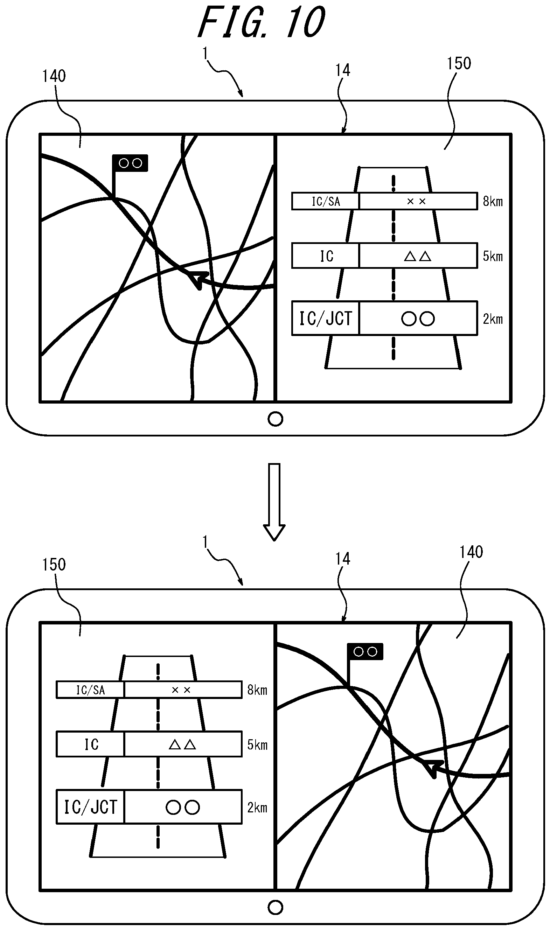

FIG. 10 illustrates a display screen including two or more screens displayed while the automobile is traveling on a motorway. In an example illustrated in FIG. 10, the display screen includes a map screen serving as the first screen 140 and a road information screen serving as the second screen 150. Here, when the display screen includes two or more screens, it is preferred to set priorities on the screens and display a high priority screen near the driver. That is, the high priority screen is more necessary information for the driver and thus preferably displayed closer to the driver for easy viewing. "Position of motorway map screen" in the setting screen illustrated in FIG. 9 is an item to set a priority to the map screen. In the example illustrated in FIG. 9, the position of the motorway map screen is set to "driver's seat side". That is, the priority of the map screen (i.e., the first screen 140) is set to be higher than that of the road information screen (i.e., the second screen 150).

When the controller 11 determines that the position of the driver's seat is the right side (the seat 31 in the example illustrated in FIG. 8), the controller 11 displays the map screen with a high priority on the right side near the driver, as illustrated by the lower diagram in FIG. 10. Then, the controller 11 displays the road information screen with a low priority at a position farther from the driver than the map screen (i.e., on a passenger seat side). That is, when the high priority screen is located farther from the driver (see the upper diagram in FIG. 10), the controller 11 moves the high priority screen such that it is displayed in a position near the driver (see the lower diagram in FIG. 10). At this time, the controller 11 interchanges (rearranges) the positions of the low priority screen and the high priority screen and continues to display the low priority screen. As described above, when the display screen includes two or more screens, the controller 11 can rearrange their display positions, based on the priorities of the screens. Here, in a case in which the map screen is set to be displayed on the passenger side in the setting screen illustrated in FIG. 9, the priority of the map screen (i.e., the first screen 140) is set to be lower than that of the road information screen (i.e., the second screen 150), in a manner opposite to the above.

### (Change of Display Screen Area)

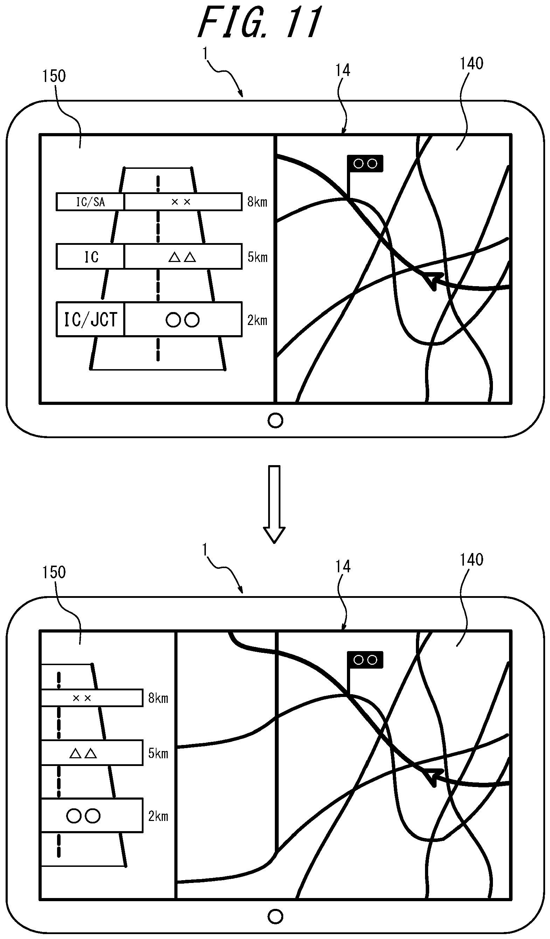

The display screen illustrated in FIG. 11 includes the map screen serving as the first screen 140 and the road information screen serving as the second screen 150, in the same manner as FIG. 10. Here, the high priority screen displayed near the driver is preferably displayed to be larger than the low priority screen. That is, the high priority screen is more necessary information for the driver and thus preferably displayed in a larger size to facilitate viewing. "Size of multiple images" in the setting screen illustrated in FIG. 9 is an item to adjust the size of the multiple screens included in the display screen. In the example illustrated in FIG. 9, the size of multiple images is set to "change". That is, the size of the screen displayed near the driver is adjusted to be larger than another screen.

When it is determined that the driver's seat is positioned on the right side, the controller 11 increases a display screen area (a size) of the map screen located near the driver. The controller 11 increases the size of the map screen near the driver to be larger than at least the size of the road information screen positioned farther from the driver than the map screen. Here, a specific size (e.g., 70% of the display area of the display 14) of the screen near the driver can be set in the setting screen. Further, for example, a ratio of the size of the screen near the driver to the size of another screen positioned farther from the driver can be set in the setting screen. Here, the controller 11 continues to display the screen positioned farther from the driver. As illustrated in FIG. 11, the size of the screen positioned farther from the driver may be adjusted such that only a portion thereof is displayed. As described above, when the display screen includes two or more screens, the controller 11 increases the display screen area of the screen near the driver to be larger than the display screen area of the screen positioned farther from the driver. Here, in a case in which the size of the multiple images is set to "same" in the setting screen illustrated in FIG. 9, the multiple screens included in the display screen are displayed in the same size.

### (Icon Display Position)

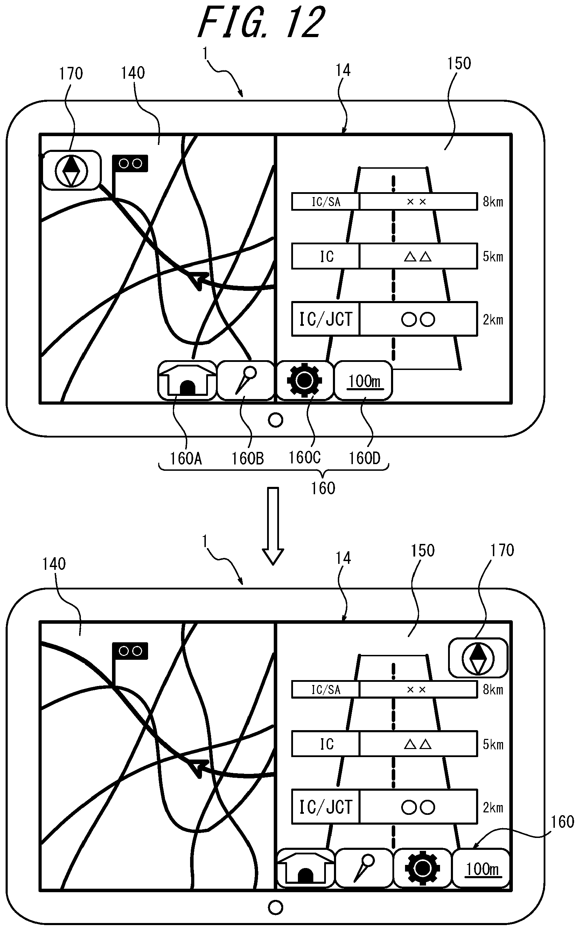

The display screens illustrated in FIG. 12 include an icon group 160 and an icon 170. The icon group 160 and the icon 170 may be displayed when a gesture (e.g., a left-right gesture) is detected in a non-display state. Also, the icon group 160 and the icon 170 may return to the non-display state when a certain period of time has elapsed without an operation by the driver after they are displayed. The icon group 160 is a set of a plurality of icons 160A, 160B, 160C and 160D. The user can cause an associated function to be executed by selecting the icon 160A, 160B, 160C, 160D or 170 performing a gesture. The icon 160A is associated with a function to display home on the map screen. The icon 160B is associated with a function to register the current position or a desired position on the map screen. The icon 160C is associated with a function to display a setting menu list. For example, the setting screen illustrated in FIG. 9 can be displayed when it is selected from the setting menu list. The icon 160D is associated with a function to specify the scale of the map screen. The icon 170 is associated with a function to specify a display mode of the map screen. The icon 170 is used to switch between, for example, a north up display in which the top represents north and a head up display in which the top represents the traveling direction of the automobile.

Here, the icon group 160 and the icon 170 are preferably displayed near the driver to facilitate an operation such as a gesture selection. The "Icon Position" in the setting screen illustrated in FIG. 9 is an item to adjust a position of an icon included in the display screen. In the example illustrated in FIG. 9, the position of the icon is set to "driver's seat side".

When the controller 11 determines that the driver's seat is positioned on the right side, the controller 11 displays the icon group 160 and the icon 170 on the right side near the driver, as illustrated in the lower diagram in FIG. 12. That is, the controller 11 shifts the icon group 160 and the icon 170 located remote from the driver's seat in a parallel direction (left-right direction) to a position near the driver's seat. In this way, the controller 11 shifts the icons to a position near the driver when the display screen includes the icons. Here, in a case in which the position of the icon is set to "initial position" in the setting screen illustrated in FIG. 9, the icon is not shifted and is displayed at the first position.

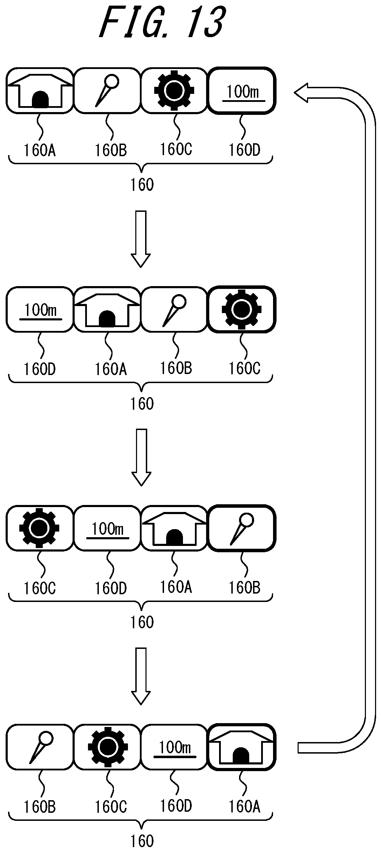

When the proximity sensor 18 detects the first gesture (e.g., the left-right gesture), the controller 11 may display the icons 160A, 160B, 160C, and 160D included in the icon group 160 in a rotated manner. Then, when the proximity sensor 18 detects the second gesture (e.g., the up-down gesture), the controller 11 may execute the function of the icon displayed closest to the driver's seat. FIG. 13 is a diagram illustrating a rotation manner of the icon group 160. As illustrated in FIG. 13, when the first gesture is detected, the controller 11 executes the rotation of the icons 160A, 160B, 160C, 160D. In the example illustrated in FIG. 13, the icon located closest to the driver's seat sequentially changes from the icon 160D, the icon 160C, the icon 160B, and the icon 160A. By this rotation, the controller 11 can facilitate a user's selection of an icon included in the icon group 160. Further, when a gesture (e.g., a front-rear gesture) that is neither the first gesture nor the second gesture is detected, the controller 11 may determine that the icon 170 is selected. Then, when the second gesture is detected in a state in which the icon 170 is selected, the controller 11 may execute the function of the icon 170 (i.e., switching of the map display). In another embodiment, the controller 11 may rotate the icon 170 in addition to the icons 160A, 160B, 160C, and 160D to sequentially change an icon to be selected. Here, the controller 11 employs the same method in the setting screen illustrated in FIG. 9. That is, when the first gesture is detected, the controller 11 sequentially selects "position of motorway map screen", "size of multiple images", "icon position" and "center position of single screen". Then, when the second gesture is detected, the controller 11 switches the setting of the selected item (e.g., interchanges the passenger seat side and the driver's seat side).

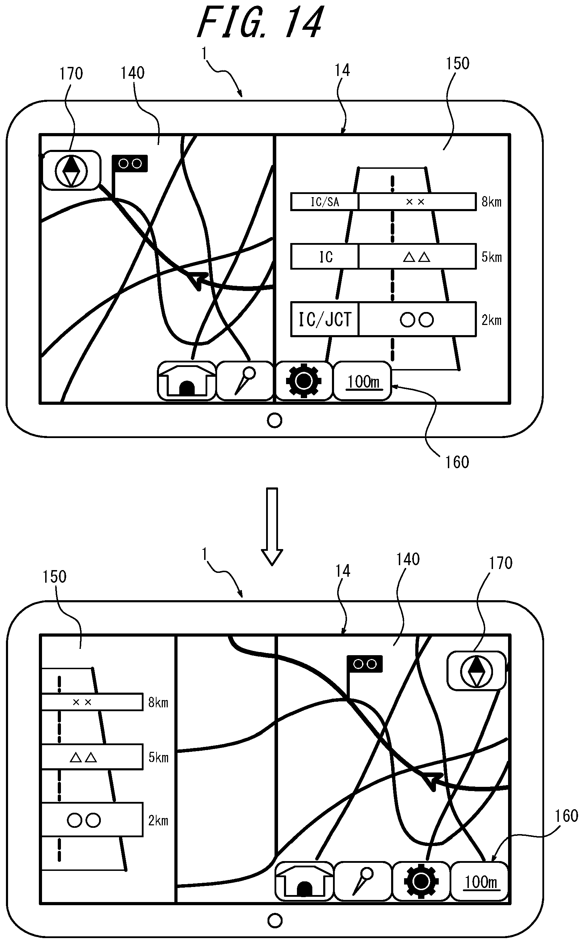

Although the display setting items have been individually described above, the controller 11 can change the display screen according to a plurality of display settings. For example, in a case in which the position of the motorway map screen is set to "driver's side", the size of multiple images is set to "change", and the position of the icon is set to "driver's side", the controller 11 changes the display screen in a manner illustrated in FIG. 14. That is, the controller 11 interchanges the first screen 140 and the second screen 150 in accordance with their priorities, increases the size of the first screen 140 positioned near the driver, and displays the icon group 160 and the icon 170 near the driver. The controller 11 may sequentially or simultaneously change the plurality of display screens according to the multiple display settings specified by the user.

### (Display Adjustment for Single Screen)

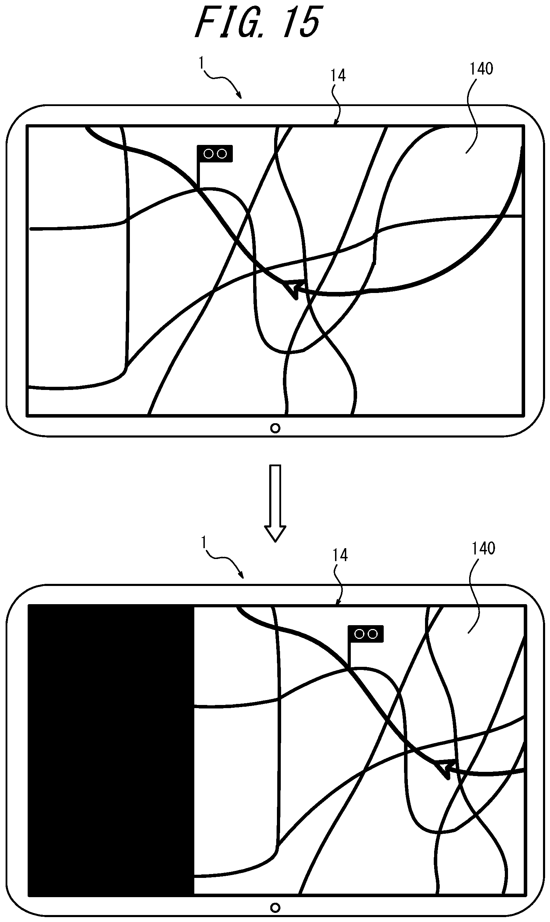

The display screen illustrated FIG. 15 can be one screen (a single screen). Here, for example, when a map screen is displayed, an indicator of the current position of the automobile is usually positioned near the center of the display 14. When the current position of the automobile is displayed at a position that facilitates viewing by the driver (i.e., at a close position), the driver can quickly perform confirmation. "Center position of single screen" in the setting screen illustrated FIG. 9 is an item to adjust the center position of a single screen included in the display screen. In the example illustrated in FIG. 9, the center position of the single screen is set to "driver's seat side". That is, the screen is moved (shifted) to the driver's seat side and displayed.

When the controller 11 determines that the driver's seat is positioned on the right side, the controller 11 shifts the center position of the single screen to the driver's seat side and displays the single screen. Here, a shift amount (an amount of movement) may be set in the setting screen. As illustrated in FIG. 15, by shifting the single screen, the area where the screen is not displayed may be displayed in a specific color (e.g., black). As described above, when the display screen is a single screen, the controller 11 may shift the center position of the single screen to the driver side and display the single screen. Here, in a case in which the center position of the single screen is set to "center" in the setting screen illustrated in FIG. 9, shifting of the screen is not executed.

### (Operation Flow Executed by Controller)

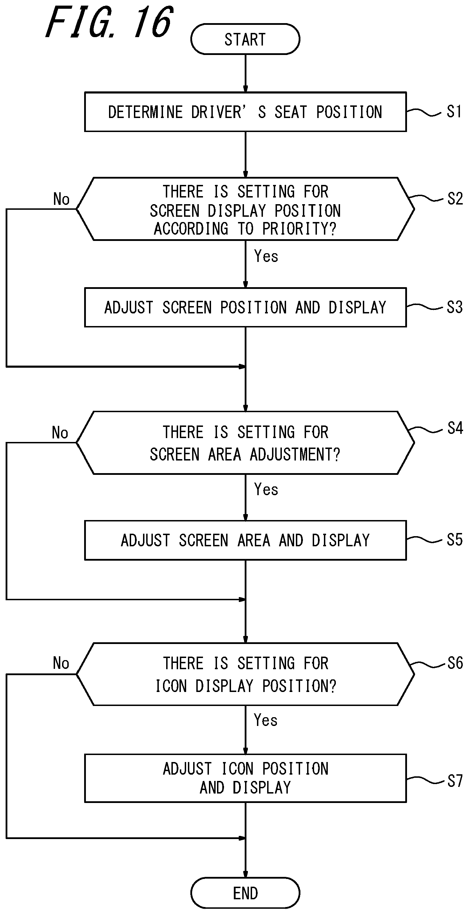

FIG. 16 is a flowchart illustrating an example operation executed by the controller 11 of the electronic apparatus 1.

The controller 11 determines the position of the driver's seat in the automobile by the method described above (step S1).

When there is a setting for the screen display position according to the priority (Yes in step S2), the controller 11 adjusts a screen position and displays the screen accordingly (step S3). For example, when the position of the motorway map screen is set to the driver's seat side in the setting screen illustrated FIG. 9, the controller 11 displays the high priority map screen at a position near the driver.

After step S3, or when there is no setting of the screen display position according to the priority (No in step S2), the controller 11 proceeds to step S4.

When there is a setting for screen area adjustment (Yes in step S4), the controller 11 adjusts the screen area and displays the screen accordingly (step S5). For example, when the size of multiple images is set to change in the setting screen illustrated in FIG. 9, the controller 11 displays in a manner such that the screen displayed near the driver is displayed to be larger than another screen.

After step S5, or when there is no setting for screen area adjustment (No in step S4), the controller 11 proceeds to step S6.

When there is a setting for the icon display position (Yes in step S6), the controller 11 adjusts and displays the icon (step S7). For example, when the position of the icon is set to the driver's seat side in the setting screen illustrated in FIG. 9, the controller 11 moves the icon to a position near the driver and displays the icon.

After step S7, or when there is no setting for the icon display position (No in step S6), the controller 11 ends the series of processes.

As described above, the electronic apparatus 1 according to the present embodiment locates the position of the driver's seat, based on the direction of the first detected gesture, and changes the display screen of the display 14 to the display screen corresponding to the position of the driver. Thus, the electronic apparatus 1 realizes a screen layout that facilitates an operation from the driver's seat. Because the electronic apparatus 1 enables a gesture input operation, the electronic apparatus 1 can be operated without the necessity for the driver to shift the line of sight to the display 14, unlike apparatuses that employ touch operations. Accordingly, the user can continue to pay attention on the surroundings of the automobile during driving, and thus driving safety is improved.

### (Other Embodiments)

Although the present disclosure has been described based on the drawings and the embodiments, it should be appreciated that those skilled in the art can easily make various variations and modifications based on the disclosure herein. Accordingly, these variations and modifications are included in the scope of the present disclosure. For example, the functions and the like included in each means or each step can be rearranged without logical contradiction, such that a plurality of means or steps are combined, or a means or step is subdivided.

Although in the above embodiment a gesture is described to be detected by the proximity sensor 18, the gesture does not necessarily need to be detected by the proximity sensor 18. The gesture may be detected by any sensor that can detect a user's gesture made without contacting the electronic apparatus. An example of such a sensor includes, for example, a camera 13 or the like.

The sensor capable of detecting a user's gesture made without contacting the electronic apparatus may include, for example, a distance measurement sensor. For example, the electronic apparatus 1 may include a distance measurement sensor instead of, or in addition to, the proximity sensor 18 and detect a gesture using the distance measurement sensor.

The distance measurement sensor is a sensor capable of measuring a distance to an object. The distance measurement sensor may be, for example, a ToF (Time of Flight) sensor. The distance measurement sensor configured by a ToF sensor includes a light emitting unit configured to emit sine wave modulated light (infrared laser light) to an object and a light receiving unit configured to receive reflected light of emitted infrared laser light from the object. The light receiving unit includes, for example, an image sensor in which a plurality of light receiving elements are arranged. The ToF sensor measures time (flight time) from emitting of infrared laser light to receiving of reflected light by each light receiving element. The ToF sensor can measure the flight time, based on a phase difference between emitted infrared laser light and received reflected light. The ToF sensor can measure the distance to the object that reflected the emitted infrared laser light, based on the measured flight time. The ToF sensor can detect a moving direction of the object, based on a time difference between reflected light from the object entering each of the plurality of light receiving elements. Thus, the ToF sensor can detect a user's gesture, based on the same principle as the proximity sensor 18. The distance measurement sensor may be arranged on the same surface of the electronic apparatus 1 as the surface on which, for example, the proximity sensor 18 is arranged.

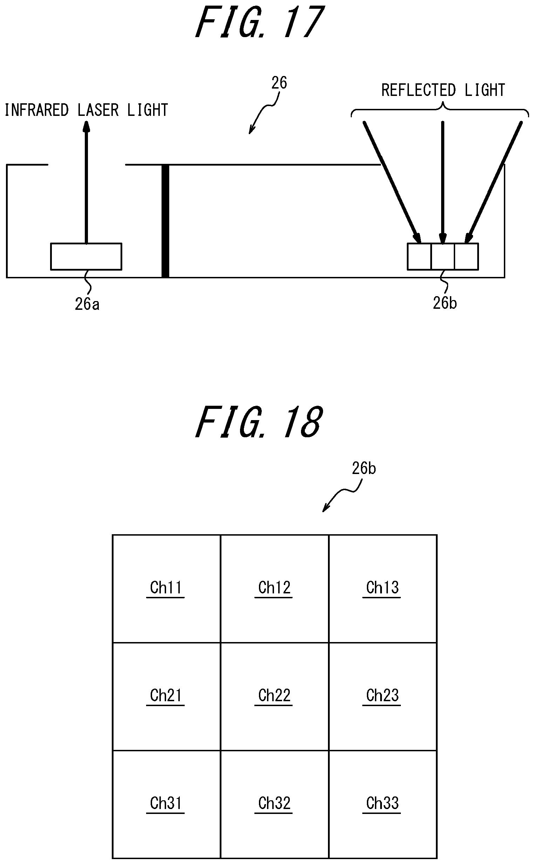

Here, a method to detect a user's gesture by the controller 11, based on an output of the distance measurement sensor, will be described with reference to FIG. 17 to FIG. 19. FIG. 17 is a diagram schematically illustrating a distance measurement sensor 26. FIG. 17 illustrates the distance measurement sensor 26 in a side view. The distance measurement sensor 26 includes a light emitting unit 26a and a light receiving unit 26b. The light emitting unit 26a emits infrared laser light to an object. The light receiving unit 26b receives reflected light of emitted infrared light from the object.

The light receiving unit 26b may include a plurality of light receiving elements. For example, the light receiving unit 26b may include nine light receiving elements arranged in 3 rows and 3 columns, as illustrated in FIG. 18. Each of the nine light receiving elements receives reflected light from the object. In the light receiving unit 26b, three light receiving elements Ch11, Ch12, and Ch13 are sequentially arranged from the left in a top row. In the light receiving unit 26b, three light receiving elements Ch21, Ch22, and Ch23 are sequentially arranged in a middle row. In the light receiving unit 26b, three light receiving elements Ch31, Ch32, and Ch33 are sequentially arranged from the left in a bottom row.

The distance measurement sensor 26 can detect a distance to the object from each of the nine light receiving elements, based on the phase difference between infrared laser light emitted by the light emitting section 26a and reflected light received by each of the nine light receiving elements of the light receiving section 26b. The distance measurement sensor 26 can detect a gesture, based on the distance to the object from each of the nine light receiving elements and a change in the distance with time.

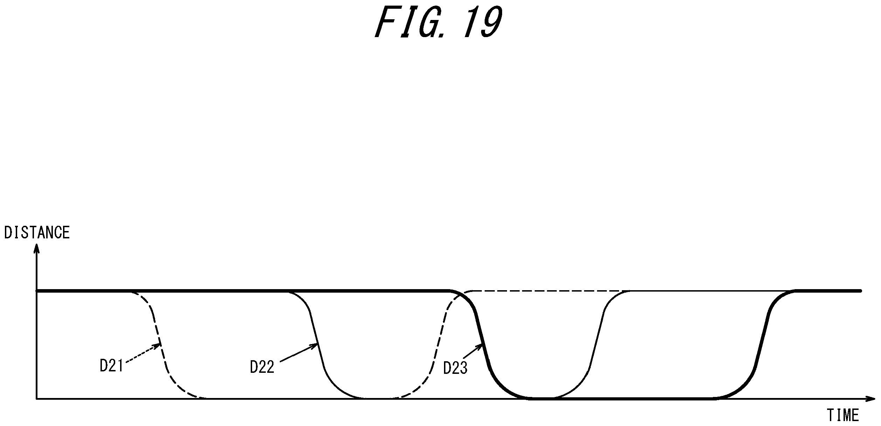

For example, it is assumed that the user performs a gesture to move the hand from left to right. In this case, respective distances to the object detected by the light receiving elements Ch21, Ch22, and Ch23 in the middle row are, for example, D21, D22, and D23. FIG. 19 is a diagram schematically illustrating a transition of the distance to the object detected by each of the light receiving elements. For example, as schematically illustrated in FIG. 19, first, when the hand serving as the object first approaches the light receiving element Ch21 arranged on the left side, the distance D21 of the object detected by the light receiving element Ch21 becomes short. Next, when the hand serving as the object approaches the light receiving element Ch22 arranged in the center, the distance D22 of the object detected by the light receiving element Ch22 becomes short. Lastly, when the hand serving as the object moves to the right, the distance D23 of the object detected by the light receiving element Ch23 arranged on the right side becomes short. The hand having approached the light receiving elements Ch21, Ch22, and Ch23 moves away from them in the same order: Ch21, Ch22, and then Ch23. Thus, the distances D21, D22, and D23 sequentially increase (and return to the initial values). An up-down gesture can also be detected by using the light receiving elements Ch12, Ch22, and Ch32, based on the same principle. In this way, the distance measurement sensor 26 can detect a gesture, based on the distance to the object from each of the nine light receiving elements and a change in the distance with time.

Although the light receiving unit 26b is described above to include nine light receiving elements, the number of light receiving elements included in the light receiving section 26b is not limited thereto. Also, the arrangement of the plurality of light receiving elements is not limited to the arrangement illustrated in FIG. 18. The number and arrangement of the light receiving elements included in the light receiving unit 26b may be appropriately determined, based on a type of a gesture to be detected.

The light emitting unit 26a of the distance measurement sensor 26 may include a plurality of light emitting elements. In this case, the distance to the object from each of the nine light emitting elements can be measured based on the phase difference between the infrared laser light emitted from each light emitting element and the reflected light received by the light receiving unit 26b. In this case also, the distance measurement sensor 26 can detect a gesture by applying the above principle, based on the distance to the object from each of the nine light emitting elements and the change in the distance with time.

In the above embodiment, further, although the controller 11 has been described to determine the position of the driver's seat according to the direction in which the first gesture is detected, this is not restrictive. The controller 11 may determine the position of the driver's seat using at least one of the methods described below instead of, or in combination with, the direction in which the first gesture is detected.

For example, the controller 11 may determine the position of the driver's seat, based on information preliminarily stored in the storage 16. For example, in a case in which the electronic apparatus 1 is preliminarily installed in the automobile 30, the storage 16 may store information regarding the position of the driver's seat. Alternatively, in a case in which the user inputs information regarding the position of the driver's seat by performing an input operation in respect to the electronic apparatus 1, the storage 16 may store the information regarding the position of the driver's seat. In this case, the controller 11 can determine the position of the driver's seat, based on the information regarding the position of the driver's seat stored in the storage 16.

For example, the controller 11 may determine the position of the driver's seat, based on an image captured by the camera 13. In particular, the controller 11 activates the camera 13 when executing control based on a gesture (e.g., when the electronic apparatus 1 is in a first operation mode). The camera 13 captures an image in front of the display 14, i.e., an interior of the automobile 30. The controller 11 may analyze the image captured by the camera 13 and determine the position of the seat in front of the steering wheel to be the position of the driver's seat. The controller 11 may analyze the image captured by the camera 13 and, when the image includes the user in the seat in front of the steering wheel, determine the position of the seat to be the position of the driver's seat. When the controller 11 determines the position of the driver's seat, the controller 11 may stop an operation of the camera 13. As a result, the controller 11 can reduce power consumption by the camera 13.

For example, in a case in which each of the seats 31 to 34 is provided with a pressure sensor, the controller 11 may determine the position of the driver's seat, based on an output of the pressure sensor. The pressure sensor may be provided, for example, under a seating surface of each of the seats 31 to 34 to which a load is applied when a user sits down. The pressure sensor detects a pressure applied to the seating surface of each of the seats 31 to 34. When a user gets in an automobile and sits down in a seat, the controller 11 can identify the seat in which the user sits, based on an output from the pressure sensor arranged in the seat. The controller 11 may determine the position of the seat in which the user sits to be the position of the driver's seat. This method can be used, for example, when one user gets in an automobile.

For example, in a case in which a motion sensor is arranged in front of each of the seats 31 to 34, the controller 11 may determine the position of the driver's seat, based on an output of the motion sensor. The motion sensor may detect whether a user is sitting in one of the seats 31 to 34, by sensing a change in ambient temperature using, for example, infrared rays. When the user gets in an automobile and sits down in a seat, the controller 11 can specify the seat in which the user sits, based on an output from the motion sensor arranged in front of the seat. The controller 11 may determine the position of the seat in which the user is sitting to be the position of the driver's seat. This method can be used, for example, when one user gets in an automobile.

For example, the controller 11 may determine the position of the driver's seat, based on opening and closing of the door of the automobile 30. For example, the automobile 30 is assumed to have one door near each of the seats 31 to 34. In particular, the automobile 30 includes one door on the right side of the seat 31 located on the right side of the front row, on the left side of the seat 32 located on the left side of the front row, on the right side of the seat 33 located on the right side of the rear row, and on the left side of the seat 34 located on the rear side left side. Also, each door is assumed to be provided with a sensor configured to detect opening and closing. The controller 11 can determine that a user sits in the seat closest to a door that has been opened and closed. This is because it is generally assumed that the user gets in the automobile 30 through the door closest to the seat in which the user intends to sit. The controller 11 may determine the position of the seat in which the user is determined to sit to be the position of the driver's seat. This method can be used, for example, when one user gets in an automobile.

For example, the controller 11 may determine the position of the driver's seat, based on a position of a door of the automobile 30 which is unlocked. When the automobile 30 has a plurality of doors as described above, the controller 11 can determine that the user sits in the seat closest to the door on which an unlocking operation is performed. This is because it is generally assumed that the user unlocks the door closest to the seat in which the user intends to sit and gets in the automobile 30 through the door. The controller 11 may determine the position of the seat in which the user is determined to sit to be the position of the driver's seat. This method can be used, for example, when one user gets in an automobile.

For example, the controller 11 may determine the position of the driver's seat, based on a hand operating the touch screen display. For example, the user preliminarily stores fingerprint data of the user's left and right fingers in the storage 16 of the electronic apparatus 1. The user can store the fingerprint data in the storage 16 of the electronic apparatus 1 by performing, for example, an input operation for registering the fingerprint data. Then, when power is supplied to the electronic apparatus 1 for drive of the automobile 30 and a user's finger contacts the touch screen display, the controller 11 reads the fingerprint of the finger contacting the touch screen display and determines whether the finger is a user's right hand finger or left hand finger. The controller 11 determines that the seat on the side opposite from the direction of a determined hand (i.e., the right hand or the left hand) is the seat in which the user is sitting. For example, when the user is sitting in the seat on the right side, the user is assumed to perform a touch input with the left hand in respect to the touch screen display arranged in the center. Thus, when the controller 11 determines that the finger contacting the touch screen display is a user's left hand finger, the controller 11 determines that the user is sitting in the seat on the right side. On the other hand, when the user is sitting in the seat on the left side, the user is assumed to perform a touch input with the right hand in respect to the touch screen display arranged in the center. Thus, when the controller 11 determines that the finger contacting the touch screen display is a user's right hand finger, the controller 11 determines that the user is sitting in the seat on the left side. The controller 11 may determine the position of the seat in which the user is determined to be sitting to be the position of the driver's seat.

For example, the controller 11 may determine the position of the driver's seat, based on a sound detected by the microphone 15. For example, based on a sound detected by the microphone 15, the controller 11 determines a direction in which the sound is generated. The controller 11 can determine that the direction in which the sound is determined to have been generated is the direction in which the user is present. Thus, the controller 11 may determine the position of the seat in the direction in which the sound is generated to be the position of the driver's seat.

In the above embodiment, further, the controller 11 may change a gesture detection range of the proximity sensor 18, according to the determined position of the driver's seat. The gesture detection range may include a direction that can be detected by the proximity sensor 18. For example, a case in which the proximity sensor 18 is movably provided in the left-right direction on the console panel is assumed. The controller 11 may control the proximity sensor 18 to face the determined driver's seat. That is, for example, when the controller 11 determines that the driver's seat is positioned on the right side with respect to the traveling direction, the controller 11 may turn the proximity sensor 18 to the right side with respect to the traveling direction. Similarly, when the controller 11 determines that the driver's seat is positioned on the left side with respect to the traveling direction, the controller 11 may turn the proximity sensor 18 to the left side with respect to the traveling direction. The proximity sensor 18 has a limited viewing angle to be able to detect a gesture. Thus, a user's gesture made out of the gesture detection range of the proximity sensor 18 will not be detected. However, by changing the detection range of the proximity sensor 18 and directing the detection range of the proximity sensor 18 toward, for example, the driver's seat in which the user is sitting, the proximity sensor 18 can detect a user's gesture more easily. Because the proximity sensor 18 can easily detect a user's gesture, a gesture input by the user is less likely to be overlooked, enabling the user to focus on driving. Accordingly, driving safety is improved.

In the above embodiment, the electronic apparatus 1 includes the proximity sensor 18. Here, the electronic apparatus 1 may include a plurality of proximity sensors 18. In the above embodiment, the proximity sensor 18 is arranged in a portion on a housing of the electronic apparatus 1 positioned at the center of a left-right direction (an x-axis direction) side of the display 14 under the display 14 in the up-down direction (in a y-axis direction). Here, the electronic apparatus 1 may include the proximity sensor 18 arranged at a different position from the above embodiment. That is, the number of the proximity sensors 18 and a position of the proximity sensor 18 included in the electronic apparatus 1 are not limited.

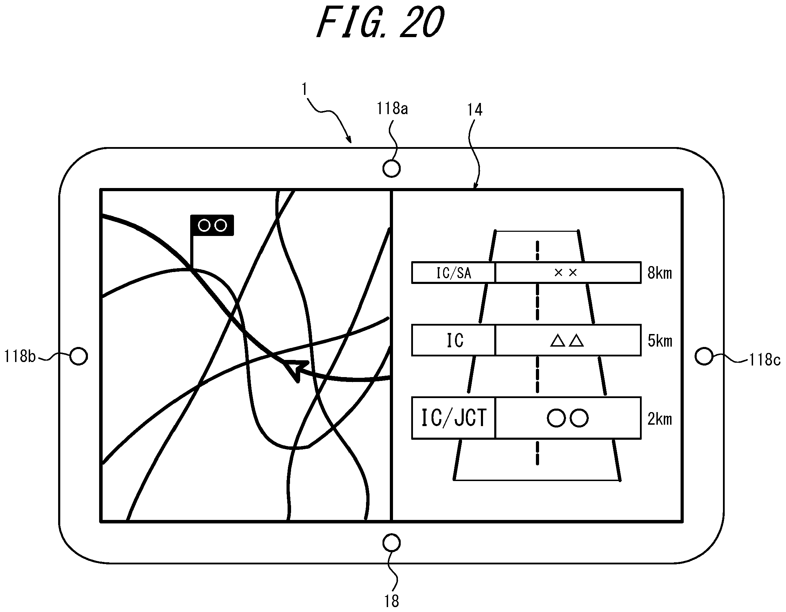

FIG. 20 is a diagram illustrating an example arrangement of proximity sensors 18, 118a, 118b, and 118c in another embodiment. In the example illustrated in FIG. 20, the electronic apparatus 1 includes a plurality of, i.e., four proximity sensors 18, 118a, 118b and 118c. The controller 11 can determine a gesture more accurately by statistically processing detection values by the four proximity sensors 18, 118a, 118b, and 118c (e.g., by calculating an average value or the like). Further, for example, even if some of the proximity sensors 18, 118a, 118b, and 118c are unable to output a detection value due to a failure or the like, the controller 11 can continue a determination regarding a gesture by using detection values by other sensors. The proximity sensors 118b and 118c are arranged at portions on the housing of the electronic apparatus positioned at the center of the up-down direction (the y-axis direction) sides of the display 14 and outside (left and right sides) of the display 14 in the left-right direction (in the x-axis direction). One of the proximity sensors 118b and 118c is located closer to the driver's seat than the other sensor and thus can detect a gesture of the driver with higher sensitivity. In yet another embodiment, the electronic apparatus 1 may include some of the proximity sensors 18, 118a, 118b, and 118c illustrated in FIG. 20. For example, the electronic apparatus 1 may include two proximity sensors 18 and 118a. For example, the electronic apparatus 1 may include two proximity sensors 118b and 118c. In yet another embodiment, the electronic apparatus 1 may include one proximity sensor positioned at one of the positions of the proximity sensor 118a, 118b, or 118c illustrated in FIG. 20. In yet another embodiment, at least some of the proximity sensors 18, 118a, 118b and 118c do need not be positioned at the center of the sides of the display 14. For example, the proximity sensors 18, 118a, 118b and 118c may be positioned outside the four corners of the display 14.

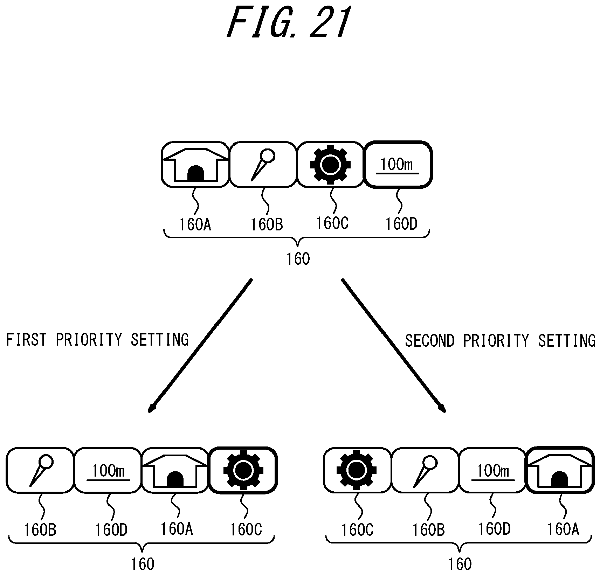

In the above embodiment, when the proximity sensor 18 detects the first gesture (e.g., a left-right gesture), the controller 11 rotates and displays the icon group 160. Here, the controller 11 may display a high priority icon near the driver, instead of rotating the icon group 160. In this case, the driver can specify the priority of the icons included in the icon group 160 in the setting screen. FIG. 21 illustrates an example in which the controller 11 displays a high priority icon near the driver. For example, in a case in which the driver sequentially sets priorities to the icons 160C, 160A, 160D, and 160B in first priority setting, the controller 11 displays the icon group 160 as illustrated in the lower left diagram in FIG. 21. Here, the driver's seat is positioned on the right side. Further, for example, in a case in which the driver sets priorities to the icons 160A, 160D, 160B, and 160C in second priority setting, the controller 11 displays the icon group 160 as illustrated in the lower right diagram in FIG. 21. The controller 11 displays the icon which the driver desires to operate near the driver. This reduces the driver from accidentally selecting a wrong icon. That is, an erroneous operation by the driver can be reduced.

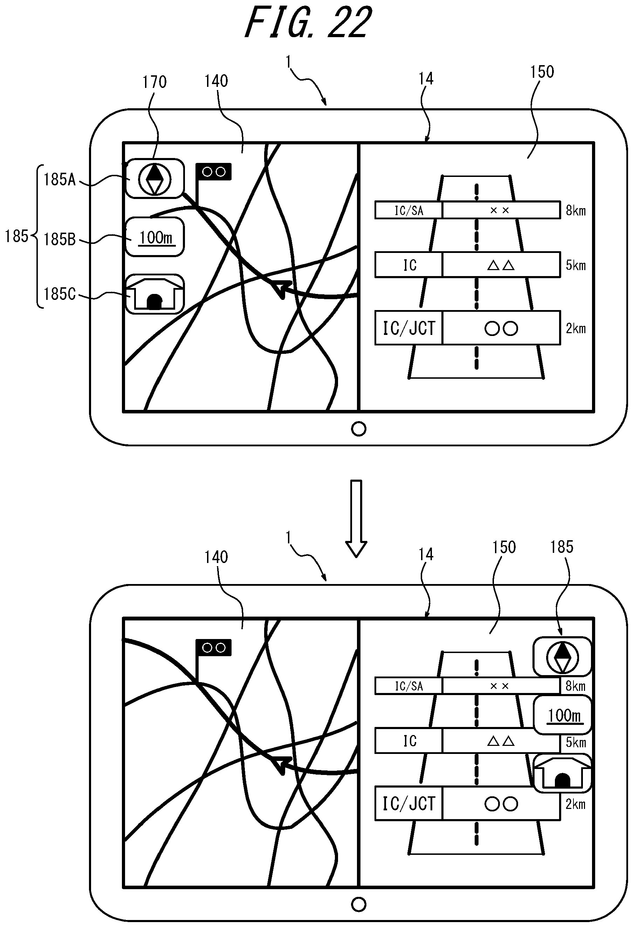

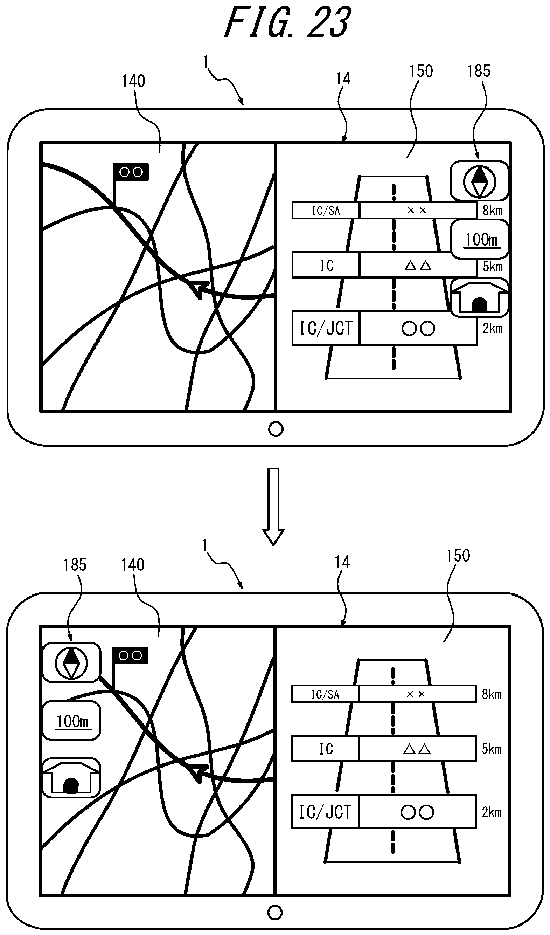

Further, in the above embodiment the icon group 160 is arranged along one longitudinal side of the display 14 (the lower side extending in the left-right direction). Here, an icon group 185 may be displayed along a transverse direction (the vertical direction) of the display 14. As illustrated in FIG. 22, the icon group 185 is a set of a plurality of icons 185A, 185B and 185C. The icon 185A is associated with a function to specify a display mode of the map screen. The icon 185B is associated with a function to specify a scale of the map screen. The icon 185C is associated with a function to display home on the map screen. As illustrated in the upper diagram in FIG. 22, the icon group 185 is displayed at a position along the left side of the display 14 on an initial screen. When the controller 11 determines that the driver's seat is positioned on the right side, the controller 11 displays the icon group 185 along the right side near the driver, as illustrated in the lower diagram in FIG. 22. Here, the upper diagram in FIG. 23 illustrates a case in which the icon group 185 is displayed at a position along the right side of the display 14 on the initial screen. In this case, when the controller 11 determines that the driver's seat is positioned on the left side, the controller 11 displays the icon group 185 along the left side near the driver, as illustrated in the lower diagram in FIG. 23.

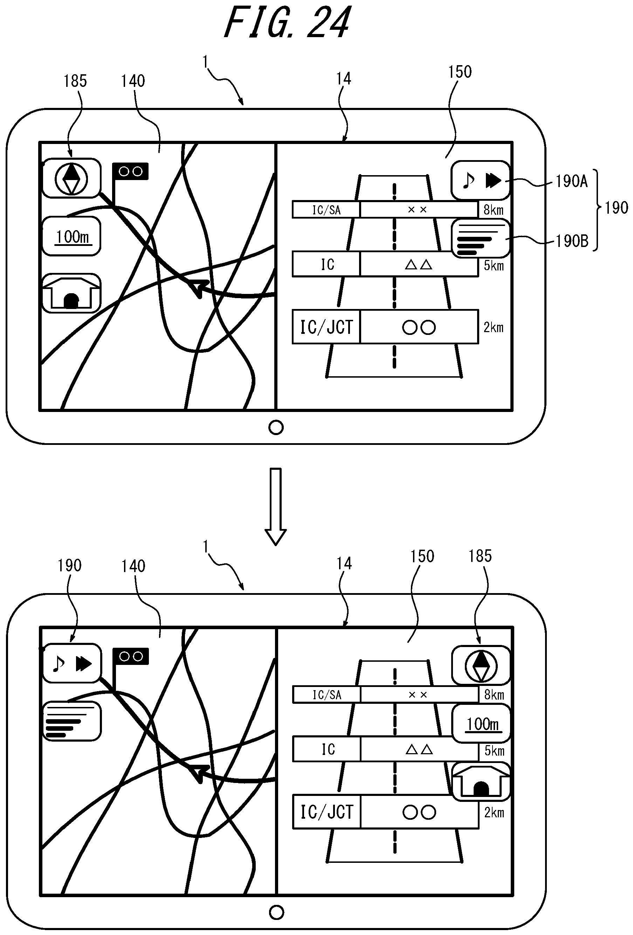

Here, on the left and right sides of the display 14, the icon group 185 and an icon group 190 may be displayed along the transverse directions (the vertical directions). The icon group 190 is a set of a plurality of icons 190A and 190B, as illustrated in FIG. 24. The icon 190A is associated with a function to select a next song on a car audio system. The icon 190B is associated with a function to adjust the volume of the car audio system. Here, the icon group 185 associated with the operation of the map screen is given a higher priority than the icon group 190 associated with the operation of the car audio system. When the controller 11 determines that the driver's seat is positioned on the right side, the controller 11 displays the icon group 185 along the right side near the driver and the icon group 190 along the left side remote from the driver, as illustrated in the lower diagram in FIG. 24. In any one of examples illustrated in FIG. 22 to FIG. 24, the controller 11 displays an icon group having a high priority for the driver near the driver. This reduces erroneous operations and enables an easy operation for the driver. Here, in yet another example, when a gesture is detected in the non-display state, the icon group 185 may be displayed along the left side or the right side of the display 14 near the driver. For example, when a gesture is detected in the non-display state of the icon group 185 (see the upper diagram in FIG. 10), the controller 11 displays the icon group 185 along the side near the driver (see the lower diagrams in FIG. 22 and FIG. 23). In this case, a gesture that causes the icon group 185 to be displayed may be, for example, a left-right gesture. The gesture that causes the icon group 185 to be displayed may be the first detected gesture described above. When the first gesture is detected in the non-display state of the icon group 185, the controller 11 determines the position of the driver's seat and displays the icon group 185 along the side near the driver. When a predetermined period has elapsed without any operation by the driver after the icon group 185 is displayed, the icon group 185 may return to the non-display state. When a gesture is detected in the non-display state, the icon group 185 may be displayed again. In this example, the high priority icon group is always displayed near the driver, enabling an easy operation for the driver.

Many aspects of the disclosure herein may be represented by a series of operations executed by a computer system or other hardware those are capable of executing a program instruction. The computer system or the other hardware include, for example, a general-purpose computer, a PC (personal computer), a special purpose computer, a workstation, PCS (Personal Communications System; a personal mobile communication system), a mobile (cellular) phone, a mobile phone having a data processing function, an RFID receiver, a game machine, an electronic notepad, a laptop computer, a GPS (Global Positioning System) receiver, and other programmable data processing apparatuses. Note that in the embodiments the various operations and control methods are executed by a dedicated circuit implemented with a program instruction (software) (e.g., discrete logic gates interconnected to perform a specific function), or a logical block, a program module and the like executed by at least one processor. The at least one processor for executing the logical block, the program module and the like includes, for example, at least one microprocessor, CPU (Central Processing Unit), ASIC (Application Specific Integrated Circuit), DSP (Digital Signal Processor), PLD (Programmable Logic Device), FPGA (Field Programmable Gate Array), a processor, a controller, a microcontroller, a microprocessor, an electronic apparatus, and other apparatuses designed to be capable of executing the functions described herein, and/or a combination thereof. The embodiments presented herein are implemented by, for example, hardware, software, firmware, middleware, a microcode, or any combination thereof. The instruction may be a program code or a code segment for executing a necessary task. The instruction may be stored in a machine-readable non-transitory storage medium or in another medium. The code segment may represent any combination of a procedure, a function, a subprogram, a program, a routine, a subroutine, a module, a software package, a class or an instruction, and a date structure or a program statement. The code segment, with another code segment or a hardware circuit, transmits/receives information, a data argument, a variable, and memory contents. Thereby, the code segment is connected to the another code segment or the hardware circuit.

The storage 16 used herein may be a computer readable tangible carrier (medium) including a range of a solid-state memory, a magnetic disk, or an optical disk. Such a media stores an appropriate set of computer instructions such as program modules for causing the processor to execute the techniques disclosed herein, or data structures. The computer-readable media includes: electrical connection with one or more wires; a magnetic disk storage; a magnetic cassette; a magnetic tape; another type of magnetic or optical storage device such as CD (Compact Disk), LD® (Laser Disk, LD is a registered trademark in Japan, other countries, or both), DVD® (Digital Versatile disc, DVD is a registered trademark in Japan, other countries, or both), a Floppy® disk (Floppy is a registered trademark in Japan, other countries, or both), and a Blu-ray disc (Blue-ray disc is a registered trademark in Japan, other countries, or both); a portable computer disk; RAM (Random Access Memory); ROM (Read-Only Memory); rewritable and programmable ROM such as EPROM (Erasable Programmable Read-Only Memory), EEPROM (Electrically Erasable Programmable Read-Only Memory), and a flash memory; other tangible storage media capable of storing information; and any combination of the above. The memory may be provided inside and/or outside a processor or a processing unit. As used herein, the term "memory" refers to any types of a long-term memory, a short-term memory, a volatile memory, a nonvolatile memory, or other memories. That is, the term "memory" is not limited to a particular type of memory and/or a particular number of memories. Further, a type of a medium to store information is also not limited.

### REFERENCE SIGNS LIST

- 1: electronic apparatus
- 11: controller
- 12: timer
- 13: camera
- 14: display
- 15: microphone
- 16: storage
- 17: communication interface
- 18: proximity sensor
- 19: UV sensor
- 20: illuminance sensor
- 21: accelerometer
- 22: geomagnetic sensor
- 23: atmospheric pressure sensor
- 24: gyro sensor
- 25: speaker
- 26: distance measurement sensor
- 26a: light emitting unit
- 26b: light receiving unit
- 30: automobile
- 31, 32, 33, 34: seat
- 118a, 118b, 118c: proximity sensor
- 140: first screen
- 150: second screen
- 160: icon group
- 170: icon
- 180: light source infrared LED
- 181: lens
- SU, SR, SD, SL: photodiode

## Claims

1. An electronic apparatus comprising:
a sensor configured to detect a gesture made without contacting the electronic apparatus; and
a controller configured to, when the gesture made without contacting the electronic apparatus is detected while a first screen and a second screen are displayed in a display screen of a display, locate a position of a driver based on a direction of a first detected gesture and change the display screen to a display screen corresponding to the position of the driver.

2. The electronic apparatus according to claim 1,
wherein the controller is configured to display the first screen with a high priority at a position near the driver and the second screen with a low priority at a position farther from the driver than the first screen.

3. The electronic apparatus according to claim 1 or 2,
wherein the controller is configured to increase a display screen area of the first screen positioned near the driver to be larger than a display screen area of the second screen located farther from the driver than the first screen.

4. An electronic apparatus comprising:
a sensor configured to detect a gesture made without contacting the electronic apparatus; and
a controller configured to, when a gesture made without contacting the electronic apparatus is detected while an icon is displayed in a display screen of a display, locate a position of a driver based on a direction of a first detected gesture and shift the icon to a position near the driver.

5. The electronic apparatus according to claim 4,
wherein the controller is configured to translate the icon in a direction.

6. The electronic apparatus according to claim 4 or 5,
wherein the controller is configured to shift the icon to a position along a side of the display screen near the driver.

7. The electronic apparatus according to any one of claims 1 to 6,
wherein the electronic apparatus is an in-vehicle apparatus, and
a position of a driver is a driver sheet.

8. A mobile body including the electronic apparatus according to any one of claims 1 to 7.

9. A mobile body communicatively connected to the electronic apparatus according to any one of claims 1 to 7.

10. A program for controlling an electronic apparatus including a sensor configured to detect a gesture made without contacting the electronic apparatus and also including a controller, the program causing the controller to perform:
a step of, when the gesture made without contacting the electronic apparatus is detected by the sensor while a first screen and a second screen are displayed in a display screen of a display, locating a position of a driver based on a direction of a first detected gesture; and
a step of changing the display screen to a display screen corresponding to the position of the driver.

11. A program for controlling an electronic apparatus including a sensor configured to detect a gesture made without contacting the electronic apparatus and also including a controller, the program causing the controller to perform:
a step of, when the gesture made without contacting the electronic apparatus is detected by the sensor while an icon is displayed in a display screen of a display, locating a position of a driver based on a direction of a first detected gesture; and
a step of shifting the icon to a position near the driver.

12. A control method of an electronic apparatus including a sensor configured to detect a gesture made without contacting the electronic apparatus and also including a controller, wherein
the controller performs:
a step of, when the gesture made without contacting the electronic apparatus is detected by the sensor while a first screen and a second screen are displayed in a display screen of a display, locating a position of a driver based on a direction of a first detected gesture; and
a step of changing the display screen to a display screen corresponding to the position of the driver.

13. A control method of an electronic apparatus including a sensor configured to detect a gesture made without contacting the electronic apparatus and also including a controller, wherein
the controller performs:
a step of, when the gesture made without contacting the electronic apparatus is detected by the sensor while an icon is displayed in a display screen of a display, locating a position of a driver based on a direction of a first detected gesture; and
a step of shifting the icon to a position near the driver.
